# FASCICULE DE BREVET EUROPEEN

(11) **EP 0 603 083 B1**
(45) Date de publication et mention de la délivrance du brevet: **19.03.1997**
(21) Numéro de dépôt: 93403090.9
(22) Date de dépôt: 17.12.1993
(51) Int. Cl.: B60S 1/08

(54) **Unité d'entraînement pour un essuie-glace de véhicule automobile**
Antriebseinheit für einen Kraftfahrzeugscheibenwischer
Drive unit for a windscreen wiper of a vehicle

(30) Priorité: 17.12.1992 FR 9215239
(43) Date de publication de la demande: 22.06.1994
(73) Titulaire: VALEO SYSTEMES D'ESSUYAGE, 78321 La Verrière (FR)
(72) Inventeur: Blanchet, Pierre, F-86140 Lencloitre (FR)
(74) Mandataire: Gamonal, Didier

(56) Documents cités:
- WO-A-89/10652
- WO-A-92/13381
- DE-A- 3 906 842
- DE-A- 4 116 791

## Description

La présente invention concerne une unité d'entraînement pour un essuie-glace de véhicule automobile.

L'invention concerne plus particulièrement une unité d'entraînement du type comportant un moteur électrique agencé dans un carter de moteur ouvert à l'une de ses extrémités axiales, un support porte-balais agencé à l'intérieur du carter de moteur à proximité de son extrémité ouverte, du type comportant un mécanisme réducteur agencé dans un carter de réducteur comprenant une partie de liaison qui se termine par une portion constituant un flasque de fermeture de l'extrémité ouverte du carter de moteur, et du type comportant des moyens de raccordement électrique de l'unité d'entraînement qui comportent des contacts électriques accessibles depuis l'extérieur de l'unité d'entraînement, les contacts électriques et le support porte-balais étant régroupés dans un module de raccordement.

On connaît de l'état de la technique différents exemples de réalisation compacts d'une telle unité d'entraînement.

C'est par exemple le cas de l'unité d'entraînement décrite et représentée dans le document FR-A-2.449.006 dans laquelle l'organe support des balais est une plaque porte-balais agencée autour du collecteur du moteur et dans laquelle les moyens de raccordement électrique sont réalisés sous la forme d'un élément indépendant du carter de moteur et du carter de réducteur qui est agencé latéralement dans les portions correspondantes des parois de ces deux composants sous la forme d'un élément de connecteur dont les parties métalliques conductrices s'étendent dans différentes directions pour être reliées d'une part à la plaque porte-balais et d'autre part à l'intérieur du carter de réducteur. Cette solution n'est pas satisfaisante car son assemblage est particulièrement complexe et sa structure ne permet pas de réaliser de manière simple les différentes connexions électriques entre le connecteur proprement dit et les éléments internes de l'unité auxquels il est relié.

Une autre solution est décrite et représentée dans le document FR-A-2.527.855 dans laquelle la plaque porte-balais constitue avec le connecteur de raccordement électrique une pièce unique qui forme en partie couvercle de fermeture du carter de réducteur.

Cette solution n'est pas non plus satisfaisante dans la mesure où cette pièce unique est de forme très complexe, difficile à réaliser et nécessite, par exemple pour intervenir pour changer l'une des roues dentées du mécanisme réducteur, de démonter l'ensemble de l'unité pour déposer la pièce unique de forme complexe.

La présente invention a pour but de proposer une unité d'entraînement du type mentionné précédemment qui soit de conception simple, facile à assembler et qui permette une grande modularité pour la réalisation en grande série d'unités adaptées en fonction des besoins des constructeurs automobiles.

Dans ce but, l'invention propose une unité d'entraînement du type divulgué par FR-A-2 449 006, caractérisée en ce que le module de raccordement est agencé à l'intérieur du carter de moteur à proximité de l'extrémité ouverte de ce dernier, et en ce que le flasque de fermeture comporte une fenêtre débouchant à l'extérieur du carter de réducteur et de sa partie de liaison, et qui s'étend en regard des contacts électriques du module de raccordement.

Selon divers modes de réalisation de l'invention :
- les contacts électriques font partie d'un élément de connecteur électrique du module de raccordement dont une paroi latérale formant boîtier de connecteur s'étend à travers la fenêtre du flasque de fermeture ;
- le module de raccordement comporte un capteur qui coopère avec un organe tournant du mécanisme réducteur et dont le corps de capteur est porté par le module de raccordement ;
- le flasque de fermeture est réalisé sous la forme d'une cloison dans laquelle est formée une ouverture pour le passage du corps de capteur ;
- le capteur comporte des éléments conducteurs ;
- le module de raccordement comporte une plaque de raccordement en matériau isolant ;
- la plaque de raccordement est une plaque intermédiaire agencée entre le flasque de fermeture du carter de moteur et une plaque parallèle porte-balais;
- la plaque porte-balais est fixée à la plaque de raccordement par des moyens d'amortissement des vibrations ;
- la plaque de raccordement comporte des moyens pour sa fixation sur le carter de moteur ;
- la plaque de raccordement est réalisée par moulage en matière plastique ;
- les contacts électriques sont réalisés sous la forme d'inserts noyés lors du moulage de la plaque intermédiaire ;
- le boîtier de connecteur est réalisé venu de matière avec la plaque de raccordement ;
- le corps de capteur est réalisé venu de matière avec la plaque de raccordement ;
- les éléments conducteurs du capteur sont réalisés au moins en partie sous la forme d'inserts noyés lors du moulage du corps de capteur ;
- les éléments conducteurs sont des lames conductrices qui s'étendent transversalement depuis la plaque de raccordement, qui font saillie à l'intérieur du capteur du réducteur et dont les extrémités libres coopèrent avec des pistes conductrices formées sur une face radiale de l'organe tournant du mécanisme réducteur ;
- le capteur est un capteur électromagnétique ;
- le capteur comporte un premier élément de capteur porté par le module de raccordement et un second élément de capteur, agencé à l'intérieur du carter de réducteur, et fixé de manière amovible au premier élément de capteur.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective éclatée d'un premier mode de réalisation d'une unité d'entraînement conforme aux enseignements de l'invention ;
- la figure 2 est une vue latérale, suivant la flèche F de la figure 1, du carter de réducteur ;
- la figure 3 est une vue en perspective de dessous du carter de réducteur ;
- la figure 4 est une vue latérale en élévation du module de raccordement de l'unité d'entraînement illustrée à la figure 1 ;
- les figures 5 et 6 sont des vues latérales de droite et de gauche du module de raccordement de la figure 4 ;
- la figure 7 est une vue de dessus du module de raccordement de la figure 4 ;
- la figure 8 est une vue en perspective éclatée d'un second mode de réalisation d'une unité d'entraînement conforme aux enseignements de l'invention ; et
- la figure 9 est une vue en perspective d'un troisième exemple de réalisation du module de raccordement.

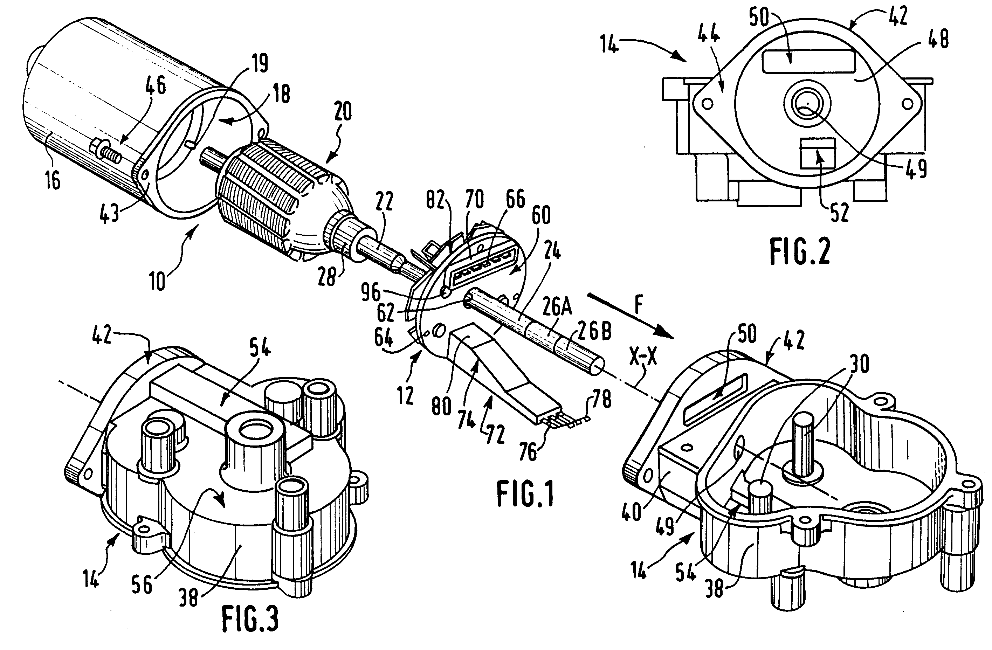

L'unité d'entraînement illustré à la figure 1 comprend pour l'essentiel, un moteur électrique 10, un module de raccordement électrique 12 et un mécanisme réducteur dont le carter 14 est illustré sur la figure 1 sans son couvercle de fermeture.

Le moteur 10 comporte un carter de moteur 16 de forme générale cylindrique dont une extrémité axiale 18 est ouverte pour permettre l'introduction du rotor 20 dont l'arbre de sortie 22 se prolonge axialement par un corps 24 dont l'extrémité libre comporte deux tronçons consécutifs 26A et 26B de filetages inversés.

Le rotor 20 comporte également un collecteur 28.

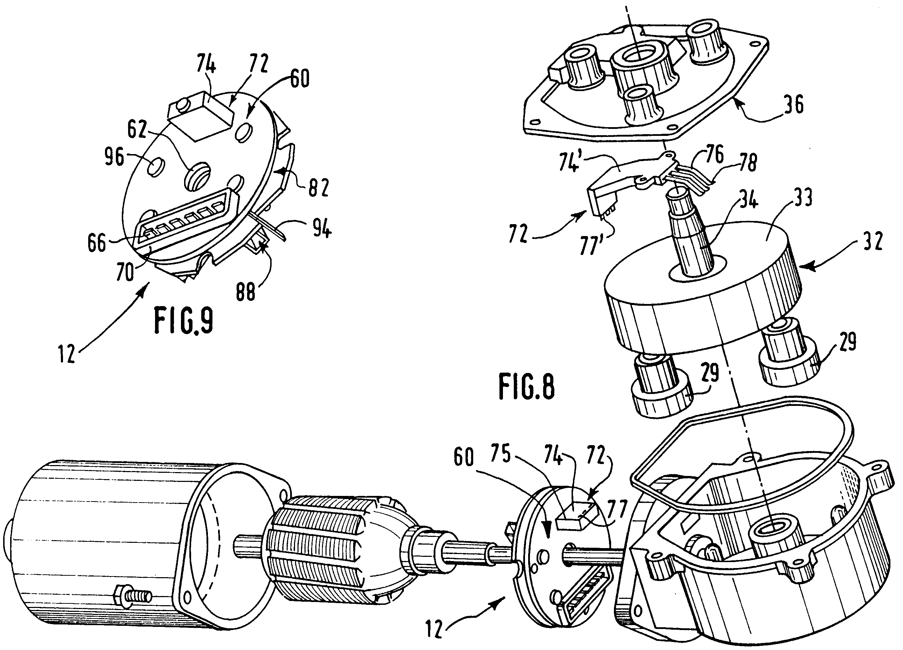

Le carter de réducteur 14 est une pièce réalisée par moulage en forme générale de pot destiné à recevoir sur des axes 30, comme cela est illustré à la figure 8, des pignons dentés 29 qui coopèrent d'une part avec la vis sans fin 26A, 26B et, d'autre part, avec une roue de sortie 32 dont l'arbre de sortie 34 passe à travers le couvercle de fermeture 36 pour entraîner une tête d'entraînement d'un essuie-glace (non représenté).

La paroi latérale 38 de la partie principale du carter de réducteur 14 se prolonge transversalement, c'est-à-dire selon une direction parallèle à l'axe de rotation X-X du rotor 20, par une partie de liaison 40 qui se termine par un flasque 42.

Le flasque 42, qui est par exemple réalisé venu de moulage avec le carter de réducteur 14, est un flasque de liaison du mécanisme réducteur avec le moteur 10 dont il assure la fermeture de l'extrémité axiale ouverte 18.

A cet effet, la bride 43 du carter de moteur 16 est prévue pour être reçue dans un emplacement complémentaire 44 du flasque 42 et la fixation entre ces deux éléments est assurée par exemple au moyen de vis 46.

Comme on peut le constater sur les figures 1 et 2, le flasque 42 se présente sous la forme d'une cloison pleine 48 dans laquelle sont formées d'une part une fenêtre 50 et d'autre part une ouverture 52.

La fenêtre 50 est de forme générale rectangulaire et elle débouche à l'extérieur du carter 14 et de sa partie de liaison 40, tandis que l'ouverture 52 débouche à l'intérieur du carter 14 au droit d'un logement 54 formé en creux dans le fond 56 du carter 14.

Dans le mode de réalisation illustré aux figures 1 à 3, les moyens de fixation de l'unité d'entraînement, par exemple sur un élément de structure d'un véhicule automobile, sont réalisés venus de matière avec le fond 56 du carter 14.

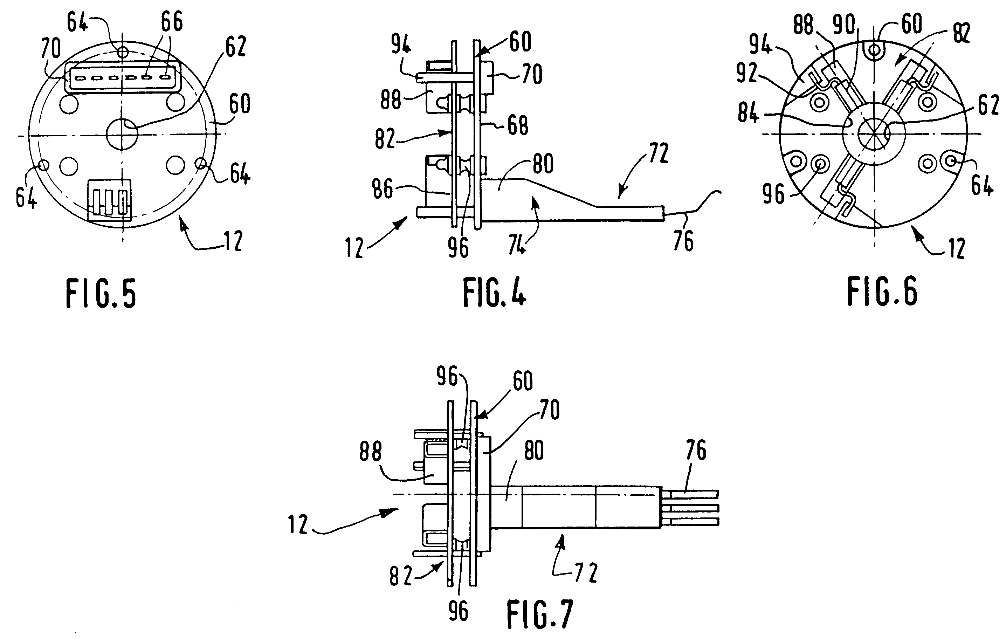

On décrira maintenant en détail le premier exemple de réalisation du module de raccordement 12 illustré aux figures 1 et 4 à 7.

Le module 12 est pour l'essentiel constitué par une plaque de raccordement 60 réalisée par moulage en matière plastique isolante.

La plaque 60 présente une forme générale de disque percé en son centre par un trou 62 pour le passage de l'arbre 22.

La plaque 60 comporte trois trous 64 répartis angulairement de manière régulière à sa périphérie pour permettre sa fixation à l'intérieur du carter de moteur 16 dans lequel sont prévus des pions d'indexation 19 reçus dans les trous 64 et dont les têtes sont serties après la mise en place du module de raccordement 12.

La plaque de raccordement 60 est réalisée lors d'une opération de surmoulage autour d'une structure métallique de connexion en matériau conducteur (non représentée en détail) qui constitue un réseau de raccordement électrique.

Cette structure comporte notamment des pattes 66 qui font saillie transversalement depuis la face latérale 68 de la plaque 60 pour constituer des contacts électriques qui sont entourés par une paroi de boîtier de connecteur 70 réalisée venue de matière avec la plaque 60.

Les dimensions et la forme de la paroi de boîtier de connecteur 70 sont telles qu'elle peut être reçue dans la fenêtre 50, lorsque l'unité est en position assemblée, pour constituer un connecteur de raccordement accessible depuis l'extérieur de l'unité d'entraînement.

L'unité d'entraînement comporte également des moyens de détection de la position d'au moins un des organes tournants du mécanisme de réducteur, par exemple de la roue de sortie 32, afin de permettre la commande des différents mouvements de rotation alternée de l'essuie-glace.

Ces moyens de détection comportent, dans le mode de réalisation illustré à la figure 1, un capteur 72 qui comprend un corps de capteur 74 réalisé venu de matière avec la plaque 60 et dans lequel sont noyées des lames électriques conductrices 76 faisant partie de la structure métallique de connexion du module 12, dont les extrémités libres incurvées 78 sont prévues pour coopérer avec des pistes conductrices (non représentées) formées par exemple sur la face supérieure 33 de la roue de sortie 32.

L'embase 80 du corps de connecteur présente une section transversale rectangulaire complémentaire de celle de l'ouverture 52 pour permettre l'introduction et le passage du capteur 72 à l'intérieur du carter 14 dans lequel il est reçu dans le logement 54.

Le module de raccordement électrique 12 comporte également une plaque porte-balais 82.

La plaque porte-balais 82 est également réalisée en matériau isolant sous la forme d'un disque percé en son centre par un trou 84 pour le passage du collecteur 28 du rotor 20.

La plaque 82 porte, sur sa face latérale 86 des éléments 88 servant au guidage de charbons 90 qui sont prévus pour coopérer avec le collecteur 28 du rotor 20.

Les charbons 90 sont reliés par des fils 92 à des parties 94, non recouvertes de matière plastique, de la structure conductrice noyée dans la plaque de raccordement 60.

Afin d'éviter la transmission des bruits de frottement des charbons 90 sur le collecteur 28 à l'unité d'entraînement, et notamment aux carters 16 et 14, la plaque porte-charbons 82 est fixée sur la plaque de raccordement 68 par quatre amortisseurs de vibration 96 réalisés par exemple en matériau élastomère.

Le module de raccordement 12 qui vient d'être décrit en détail constitue donc un sous-ensemble unitaire particulièrement compact, dont l'assemblage et la réalisation sont assurés indépendamment des phases d'assemblage de l'unité d'entraînement proprement dite, et qui peut être monté de manière très simple.

L'assemblage de l'unité d'entraînement s'effectue en effet de la manière suivante.

Après avoir mis en place le rotor 20 dans le carter 16, on vient mettre en place le module d'entraînement 12 à l'intérieur du carter de moteur 16 avec les charbons 90 en place autour du collecteur 28.

La fixation du module de raccordement 12 peut alors être effectuée par sertissage des pions 19 qui traversent les trous 64.

L'assemblage se poursuit en venant mettre en place le carter de réducteur 14 sur le carter de moteur 16.

Au cours de cette mise en place, le corps de connecteur 70 pénètre dans la fenêtre 50, le corps 74 du capteur 72 pénètre dans l'ouverture 52 et la vis sans fin 24 pénètre, par le trou 49, à l'intérieur du carter 14.

Le carter de réducteur 14 est alors fixé sur le carter du moteur 16 au moyen des vis 46.

D'une manière classique, l'assemblage se poursuit en mettant en place dans le carter de réducteur 14 les différents composants du mécanisme de réducteur tels que les pignons 29 et la roue 32, puis se termine par la fermeture du carter de réducteur 14 par le couvercle 36.

Au cas où il est nécessaire d'intervenir, par exemple pour une réparation, sur le mécanisme de réducteur, on constate qu'il suffit d'ouvrir le carter de réducteur 14 sans intervenir d'aucune manière sur les moyens de raccordement électrique du module de raccordement 12.

On décrira maintenant la variante de réalisation illustrée à la figure 8 sur laquelle les composants identiques ou similaires sont désignés par les mêmes chiffres de référence que ceux utilisés aux figures 1 à 7.

Dans ce second mode de réalisation, le corps 74 du capteur 72 est beaucoup plus court et comporte, sur sa face supérieure 75, des bornes 77.

En effet, le capteur 72 est réalisé en deux parties, c'est-à-dire la première partie 74 réalisée venue de matière avec la plaque de raccordement 60 du module de raccordement 12, et une seconde partie 74' qui comporte des broches 77' prévues pour permettre son raccordement avec les bornes 77.

Le corps de la seconde partie du capteur 74' comporte ici les lames 76 dont les extrémités 78 coopèrent avec les pistes de la face supérieure 33 de la roue de sortie 32.

L'assemblage de l'unité d'entraînement illustrée à la figure 8 s'effectue de la même manière que celui de l'unité illustrée à la figure 1, la seconde partie du capteur 72 étant mise en place, après avoir mis en place les pignons 29 et la roue de sortie 32, par introduction des broches 77' dans les bornes 77.

La seconde partie 74' du capteur 72 est reçue et maintenue en position dans un logement 37 formé dans le couvercle 36.

Dans ce second mode de réalisation de l'unité d'entraînement illustrée à la figure 8, les moyens pour la fixation de l'unité d'entraînement sur un élément de la structure du véhicule automobile sont réalisés venus de matière avec le couvercle 36.

Le troisième mode de réalisation du module de raccordement 12 illustré à la figure 9 diffère des précédents par la nature du capteur 72 qui est ici un capteur électromagnétique du type à effet Hall.

Le corps de capteur 74 peut être réalisé venu de matière par moulage avec la plaque de raccordement 60 comme dans les deux modes de réalisation illustrés et décrits précédemment.

## Revendications

1. Unité d'entraînement pour un essuie-glace de véhicule automobile, du type comportant un moteur électrique (10) agencé dans un carter de moteur (16) ouvert à l'une (18) de ses extrémités axiales et un support (82) porte-balais agencé à l'intérieur du carter de moteur (16) à proximité de son extrémité ouverte (18), du type comportant un mécanisme réducteur agencé dans un carter de réducteur (14) comprenant une partie de liaison (40) qui se termine par une portion (42) constituant un flasque de fermeture de l'extrémité ouverte (18) du carter de moteur (16), et du type comportant des moyens (12) de raccordement électrique de l'unité d'entraînement qui comportent des contacts électriques (66) accessibles depuis l'extérieur de l'unité d'entraînement, les contacts électriques (66) et le support (82) porte-balais étant regroupés dans un module de raccordement (12), caractérisé en ce que le module de raccordement est agencé à l'intérieur du carter de moteur (16) à proximité de l'extrémité ouverte (18) de ce dernier, et en ce que le flasque de fermeture (42) comporte une fenêtre (50) débouchant à l'extérieur du carter de réducteur (14) et de sa partie de liaison (40), et qui s'étend en regard des contacts électriques (66) du module de raccordement (12).

2. Unité d'entraînement selon la revendication 1, caractérisée en ce que les contacts électriques (66) font partie d'un élément de connecteur électrique du module de raccordement (12) dont une paroi latérale (70) formant boîtier de connecteur s'étend à travers la fenêtre (50) du flasque de fermeture (42).

3. Unité d'entraînement selon l'une des revendications 1 ou 2, caractérisée en ce que le module de raccordement (12) comporte un capteur (72) qui coopère avec un organe tournant (32, 33) du mécanisme réducteur et dont le corps de capteur (74) est porté par le module de raccordement (12).

4. Unité d'entraînement selon la revendication 3, caractérisée en ce que le flasque de fermeture (42) est réalisé sous la forme d'une cloison (48) dans laquelle est formée une ouverture (52) pour le passage du corps (74, 80) de capteur (72).

5. Unité d'entraînement selon l'une des revendications 3 ou 4, caractérisée en ce que le capteur (74) comporte des éléments conducteurs (76).

6. Unité d'entraînement selon l'une quelconque des revendications précédentes, caractérisée en ce que le module de raccordement (12) comporte une plaque de raccordement (60) en matériau isolant.

7. Unité d'entraînement selon la revendication 6, caractérisée en ce que la plaque de raccordement (60) est une plaque intermédiaire agencée entre le flasque de fermeture (42, 48) et une plaque parallèle (82) porte-balais (88, 90).

8. Unité d'entraînement selon la revendication 7, caractérisée en ce que la plaque porte-balais (82) est fixée à la plaque de raccordement (60) par des moyens (96) d'amortissement des vibrations.

9. Unité d'entraînement selon l'une quelconque des revendications 6 à 8, caractérisée en ce que la plaque de raccordement (60) comporte des moyens (64) pour sa fixation sur le carter de moteur (16).

10. Unité d'entraînement selon l'une quelconque des revendications 6 à 9, caractérisée en ce que la plaque de raccordement (60) est réalisée par moulage en matière plastique.

11. Unité d'entraînement selon la revendication 10, caractérisée en ce que les contacts électriques (66) sont réalisés sous la forme d'inserts noyés lors du moulage de la plaque intermédiaire de raccordement (60).

12. Unité d'entraînement selon la revendication 11 prise en combinaison avec la revendication 2, caractérisée en ce que le boîtier de connecteur (70) est réalisé venu de matière avec la plaque de raccordement (60).

13. Unité d'entraînement selon la revendication 11 prise en combinaison avec l'une quelconque des revendications 3 à 5, caractérisée en ce que le corps de capteur (74) est réalisé venu de matière avec la plaque de raccordement (60).

14. Unité d'entraînement selon la revendication 13 prise en combinaison avec la revendication 5, caractérisée en ce que les éléments conducteurs (76) du capteur (72) sont réalisés au moins en partie sous la forme d'inserts noyés lors du moulage du corps (74, 80) de capteur.

15. Unité d'entraînement selon la revendication 14, caractérisée en ce que les éléments conducteurs (76) sont des lames conductrices qui s'étendent transversalement depuis la plaque de raccordement (60), qui font saillie à l'intérieur du carter du réducteur (14) et dont les extrémités libres (78) coopèrent avec des pistes conductrices formées sur une face radiale (33) de l'organe tournant (32) du mécanisme réducteur.

16. Unité d'entraînement selon l'une quelconque des revendications 3 à 5, caractérisée en ce que le capteur (72) est un capteur électromagnétique.

17. Unité d'entraînement selon l'une quelconque des revendications 3 à 5, caractérisée en ce que le capteur comporte un premier élément de capteur porté par le module de raccordement (12) et un second élément de capteur (74'), agencé à l'intérieur du carter de réducteur (14), et fixé de manière amovible au premier élément de capteur.

## Claims

1. A drive unit for a windshield wiper in a motor vehicle, of the kind comprising an electric motor (10) disposed in a motor housing (16) open at one (18) of its axial ends and a brush-carrier (82) disposed inside the motor housing (16) close to its open end (18), of the kind comprising a reduction gear mechanism disposed in a reduction gear housing (14) comprising a connection part (40) which ends in a portion (42) forming an end plate for closing the open end (18) of the motor housing (16), and of the kind comprising electrical connection means (12) for the drive unit which comprise electric contacts (66) accessible from outside the drive unit, the electric contacts (66) and the brush-carrier (82) being rearranged in a connection module (12),
**characterised in that** the connection module is disposed inside the motor housing (16) close to the open end (18) thereof,
**and in that** the end plate (42) comprises a window (50) open to the outside of the reduction gear housing (14) and of its connection part (40) and which extends opposite the electric contacts (66) of the connection module (12).

2. A drive unit according to Claim 1,
**characterised in that** the electric contacts (66) form part of an electrical connection element of the connection module (12), one lateral wall (70) of which forms a connector housing and extends through the window (50) in the end plate (42).

3. A drive unit according to one of Claims 1 or 2,
**characterised in that** the connection module (12) comprises a sensor (72) which cooperates with a revolving member (32, 33) of the reduction gear mechanism and the sensor body (74) of which is carried by the connection module (12).

4. A drive unit according to Claim 3,
**characterised in that** the end plate (42) is made in the form of a partition (48) in which an aperture (52) is formed for the passage of the body (74, 80) of the sensor (72).

5. A drive unit according to one of Claims 3 or 4,
**characterised in that** the sensor (74) comprises conductive elements (76).

6. A drive unit according to any one of the preceding Claims,
**characterised in that** the connection module (12) comprises a connection plate (60) made from insulating material.

7. A drive unit according to Claim 6,
**characterised in that** the connection plate (60) is an intermediate plate disposed between the end plate (42, 48) and a parallel brush-carrier (88, 90) plate (82).

8. A drive unit according to Claim 7,
**characterised in that** the brush-carrier plate (82) is fixed to the connection plate (60) by vibration damping means (96).

9. A drive unit according to any one of Claims 6 to 8,
**characterised in that** the connection plate (60) comprises means (64) for its attachment to the motor housing (16).

10. A drive unit according to any one of Claims 6 to 9,
**characterised in that** the connection plate (60) is made by moulding from plastics material.

11. A drive unit according to Claim 10,
**characterised in that** the electric contacts (66) are made in the form of inserts embedded during the moulding of the intermediate connection plate (60).

12. A drive unit according to Claim 11 taken in combination with Claim 2,
**characterised in that** the connector housing (70) is integral with the connection plate (60).

13. A drive unit according to Claim 11 taken in combination with any one of Claims 3 to 5,
**characterised in that** the sensor body (74) is integral with the connection plate (60).

14. A drive unit according to Claim 13 taken in combination with Claim 5,
**characterised in that** the conductive elements (76) of the sensor (72) are made at least partially in the form of inserts embedded during the moulding of the sensor body (74, 80).

15. A drive unit according to Claim 14,
**characterised in that** the conductive elements (76) are conductive blades which extend transversally from the connection plate (60), which protrude into the reduction gear housing (14) and the free ends (78) of which cooperate with conductive strips formed on a radial face (33) of the rotating member (32) of the reduction gear mechanism.

16. A drive unit according to any one of Claims 3 to 5,
**characterised in that** the sensor (72) is an electromagnetic sensor.

17. A drive unit according to any one of Claims 3 to 5,
**characterised in that** the sensor comprises a first sensor element carried by the connection module (12) and a second sensor element (74'), disposed inside the reduction gear housing (14) and detachably fixed to the first sensor element.

## Patentansprüche

1. Antriebseinheit für einen Kraftfahrzeugscheibenwischer, bestehend aus einem Elektromotor (10), der in einem an einem (18) seiner axialen Enden offenen Motorgehäuse (16) angeordnet ist, und einem Bürstenhalter (82), der im Innern des Motorgehäuses (16) in der Nähe seines offenen Endes (18) angeordnet ist, sowie aus einem Untersetzungsgetriebe, das in einem Getriebegehäuse (14) mit einem Verbindungsteil (40) angeordnet ist, der in einem Abschnitt (42) endet, welcher einen Lagerschild zum Verschluß des offenen Endes (18) des Motorgehäuses (16) bildet, und aus Mitteln (12) für den elektrischen Anschluß der Antriebseinheit, die elektrische Kontakte (66) umfassen, die von außerhalb der Antriebseinheit zugänglich sind, wobei die elektrischen Kontakte (66) und die Bürstenhalter (82) in einem Anschlußmodul (12) zusammengefaßt sind, **dadurch gekennzeichnet**, daß das Anschlußmodul im Innern des Motorgehäuses (16) in der Nähe seines offenen Endes (18) angeordnet ist und daß der Verschlußlagerschild (42) ein Fenster (50) enthält, das außerhalb des Getriebegehäuses (14) und seines Verbindungsteils (40) mündet und das sich gegenüber den elektrischen Kontakten (66) des Anschlußmoduls (12) erstreckt.

2. Antriebseinheit nach Anspruch 1 , **dadurch gekennzeichnet,** daß die elektrischen Kontakte (66) zu einem elektrischen Verbinderelement des Anschlußmoduls (12) gehören, von dem sich eine als Verbindergehäuse ausgebildete Seitenwand (70) durch das Fenster (50) des Verschlußlagerschilds (42) erstreckt.

3. Antriebseinheit nach einem der Ansprüche 1 oder 2, **dadurch gekennzeichnet,** daß das Anschlußmodul (12) einen Meßfühler (72) umfaßt, der mit einem umlaufenden Organ (32, 33) des Untersetzungsgetriebes zusammenwirkt und dessen Meßfühlerkörper (74) am Anschlußmodul (12) angebracht ist.

4. Antriebseinheit nach Anspruch 3 , **dadurch gekennzeichnet,** daß der Verschlußlagerschild (42) in Form einer Zwischenwand (48) ausgeführt ist, in die eine Öffnung (52) für den Durchgang des Körpers (74, 80) Meßfühlers (72) eingearbeitet ist.

5. Antriebseinheit nach einem der vorangehenden Ansprüche , **dadurch gekennzeichnet**, daß der Meßfühler (74) leitende Elemente (76) umfaßt.

6. Antriebseinheit nach einem der vorangehenden Ansprüche , **dadurch gekennzeichnet**, daß das Anschlußmodul (12) eine Anschlußplatte (60) aus nichtleitendem Material umfaßt.

7. Antriebseinheit nach Anspruch 6 , **dadurch gekennzeichnet,** daß es sich bei der Anschlußplatte (60) sich um eine Zwischenplatte handelt, die zwischen dem Verschlußlagerschild (42, 48) und einer als Bürstenhalter (88, 90) ausgebildeten parallelen Platte (82) angeordnet ist.

8. Antriebseinheit nach Anspruch 7 , **dadurch gekennzeichnet,** daß die Bürstenhalterplatte (82) an der Anschlußplatte (60) durch Schwingungsdämpfungsmittel (96) befestigt ist.

9. Antriebseinheit nach einem der Ansprüche 6 bis 8, **dadurch gekennzeichnet,** daß die Anschlußplatte (60) Mittel (64) für ihre Befestigung am Motorgehäuse (16) umfaßt.

10. Antriebseinheit nach einem der Ansprüche 6 bis 9, **dadurch gekennzeichnet,** daß die Anschlußplatte (60) als Formteil aus Kunststoff ausgeführt ist.

11. Antriebseinheit nach Anspruch 10 , **dadurch gekennzeichnet,** daß die elektrischen Kontakte (66) in Form von Einsätzen ausgeführt sind, die bei der Formung der Zwischenplatte eingelassen werden.

12. Antriebseinheit nach Anspruch 11 in Kombination mit Anspruch 2, **dadurch gekennzeichnet,** daß das Verbindergehäuse (70) einstückig an der Anschlußplatte (60) angeformt ist.

13. Antriebseinheit nach Anspruch 11 in Kombination mit einem der Ansprüche 3 bis 5, **dadurch gekennzeichnet,** daß der Meßfühlerkörper (74) einstückig an der Anschlußplatte (60) angeformt ist.

14. Antriebseinheit nach Anspruch 13 in Kombination mit Anspruch 5, **dadurch gekennzeichnet,** daß die leitenden Elemente (76) des Meßfühlers (72) zumindest teilweise in Form von Einsätzen ausgeführt sind, die bei der Formung des Meßfühlerkörpers (74, 80) eingelassen werden.

15. Antriebseinheit nach Anspruch 14 , **dadurch gekennzeichnet,** daß die leitenden Elemente (76) leitende Zungen sind, die sich quer von der Anschlußplatte (60) aus erstrecken, die im Innern des Getriebegehäuses (14) vorspringen und deren freie Enden (78) mit Leiterbahnen zusammenwirken, die an einer radialen Fläche (33) des umlaufenden Organs (32) des Untersetzungsgetriebes ausgebildet sind.

16. Antriebseinheit nach einem der Ansprüche 3 bis 5, **dadurch gekennzeichnet,** daß der Meßfühler (72) ein elektromagnetischer Meßfühler ist.

17. Antriebseinheit nach einem der Ansprüche 3 bis 5, **dadurch gekennzeichnet,** daß der Meßfühler ein erstes Meßfühlerelement, das am Anschlußmodul (12) angebracht ist, und ein zweites Meßfühlerelement (74') umfaßt, das im Innern des Getriebegehäuses (14) angeordnet und abnehmbar am ersten Meßfühlerelement befestigt ist.
